# EUROPÄISCHE PATENTSCHRIFT

(11) **EP 0 532 938 B1**
(45) Veröffentlichungstag und Bekanntmachung des Hinweises auf die Patenterteilung: **25.01.1995**
(21) Anmeldenummer: 92114340.0
(22) Anmeldetag: 21.08.1992
(51) Int. Cl.: G01F 1/58, G01F 1/60, G01F 1/52, G01F 1/00

(54) **Vorrichtung zur Messung des Stroms einer elektrische Ladungen enthaltenden Flüssigkeit**
Device for measuring flow of a liquid containing electrical charges
Dispositif pour la mesure de débit d'un liquide contenant des charges électriques

(30) Priorität: 21.08.1991 DE 4127694
(43) Veröffentlichungstag der Anmeldung: 24.03.1993
(73) Patentinhaber: Fischer & Porter GmbH, D-37079 Göttingen (DE)
(72) Erfinder: Kiene, Wilfried, W-3510 Münden (DE); Nissen, Peter, Dr., W-3405 Rosdorf (DE)
(74) Vertreter: Fincke, Karl Theodor, Dipl.-Phys. Dr.

(56) Entgegenhaltungen:
- DE-A- 2 510 762
- DE-A- 4 016 378
- DE-U- 9 103 046
- GB-A- 2 223 099

## Beschreibung

Die Erfindung betrifft eine Vorrichtung zur Messung des Stroms einer elektrische Ladungen enthaltenden Flüssigkeit mit einem von der Flüssigkeit durchströmten, wenigstens innenseitig elektrisch isolierenden, im wesentlichen waagerecht verlaufenden Rohrstück mit einer Magnetanordnung, die ein das Rohrstück wenigstens annähernd diametral durchsetzendes Magnetfeld erzeugt, mit einer Elektrodenanordnung, die eine Verschiebung von Ladungen in der Flüssigkeit durch das Magnetfeld quer zur Richtung des Stroms der Flüssigkeit erfaßt, und mit einer von der Elektrodenanordnung gesteuerten Auswerteschaltung, die ein dem Strom der Flüssigkeit entsprechendes, auch den Pegel der Flüssigkeit im Rohrstück berücksichtigendes Ausgangssignal abgibt.

Vorrichtungen dieser Art sind nach den deutschen Patentanmeldungen P 31 26 965 und P 40 10 727 und nach der europäischen Patentanmeldung 90 106 783 bekannt.

Die Erfindung geht von der Feststellung aus, daß der Überfall eines Wehrs ein Maß für den Flüssigkeitsstrom ist, der durch bzw. über das Wehr tritt, wie dies in dem Handbuch der Wassermessung, Verlag R. Oldenbourg, München-Wien 1965, Seite 178 bis 182, in der Patentschrift GB-A-2 223 099 oder auch in der nachreröffentlichten Patentschrift DE-A-4016378 beschrieben ist. Wird daher mit der Elektrodenanordnung der Pegel der Flüssigkeit im Rohrstück vor einem solchen Wehr erfaßt, so läßt sich daraus eine Korrekturgröße gewinnen, mit der die Messung des Stroms der Flüssigkeit verbessert werden kann.

Aufgabe der Erfindung ist es somit, eine Vorrichtung nach dem Oberbegriff des Anspruchs 1 anzugeben, die eine besonders genaue Messung des Stroms der Flüssigkeit gestattet.

Zur Lösung dieser Aufgabe ist die Vorrichtung dadurch gekennzeichnet, daß sich im Rohrstück stromabwärts der Elektrodenanordnung ein den Strom der Flüssigkeit stauendes, von der Flüssigkeit zu durchfließendes Wehr befindet und daß die Auswerteschaltung unter Einbeziehung der Abmessungen des Wehrs geeicht ist.

Um auch besonders niedrige Pegel auswerten zu können, ist die Vorrichtung bevorzugt dadurch gekennzeichnet, daß das Wehr einen sich nach unten verengenden Durchlaßquerschnitt hat.

Eine Ausführungsform, die es gestattet, bekannte Auswerteschaltungen zu ergänzen, ist dadurch gekennzeichnet, daß die Elektrodenanordnung in unterschiedlichen Höhen angeordnete Elektroden aufweist, daß die Auswerteschaltung eine den Pegel der Flüssigkeit im Rohrstück relativ zu der Elektrodenanordnung wenigstens annähernd erfassende Detektorschaltung aufweist und daß die Detektorschaltung eine das Ausgangssignal korrigierende Korrekturschaltung steuert.

Die Erfindung wird im folgenden an einem Ausführungsbeispiel unter Hinweis auf die beigefügten Zeichnungen beschrieben.
Fig. 1 zeigt, teils perspektivisch, teils schematisch, die Vorrichtung stromaufwärts des Wehrs.
Fig. 2 zeigt einen Axialschnitt durch die Vorrichtung.
Fig. 3 zeigt einen Querschnitt durch das Wehr.
Fig. 4 zeigt die Vorrichtung schematisch mit einer ihr zugehörigen Auswerteschaltung, wie sie grundsätzlich in der europäischen Anmeldung 90 106 783 beschrieben, jedoch gemäß der Erfindung ergänzt ist.

Die Figuren zeigen als Ausführungsbeispiel ein innenseitig aus elektrisch isolierendem Material bestehendes Rohrstück 1 und zwei Elektromagnete 2a, 2b zur Erzeugung eines das Rohrstück 1 im wesentlichen diametral durchsetzenden Magnetfelds. Zwei von Ladungsverschiebungen in der Flüssigkeit beeinflußte Elektroden 3a, 3b liegen derart, daß ihre mittlere Verbindungslinie X den Strom im wesentlichen diametral zum Rohrstück 1 und im wesentlichen rechtwinklig zur mittleren Verbindungslinie Y zwischen den Elektromagneten 2a, 2b durchsetzt. Die Elektromagneten 2a, 2b sind über Ab- und Umpolschalter 4, 5 mit einem Versorgungsgerät 13 verbunden. Bei entsprechender Änderung der Schaltung können die Elektromagneten 2a, 2b auch hintereinander geschaltet sein, und es kann zur Änderung der Erregung des Elektromagneten 2a oder des Elektromagneten 2b jeweils eine Zusatzwicklung auf dem Elektromagneten 2a bzw. 2b vorgesehen sein, die eine zur Erregung der Hauptwicklung gegenpolige Erregung hervorruft. Die Elektroden 3a, 3b sind mit einem Signalverstärker 6 verbunden, dessen Ausgang an eine Signalweiche 7 angeschlossen ist. Ein Taktgeber 11 schaltet synchron die Umpolschalter/Abschalter 4, 5 zu Ausgangskanälen der Signalweiche 7, die z. B. zu einem Signalspeicher 8 bei gleichsinniger Polung der Elektromagneten 2a, 2b, zu einem Signalspeicher 9 bei gegensinniger Polung der Elektromagneten 2a, 2b und zu einem Signalspeicher 10 bei abgeschaltetem Elektromagneten 2b führen. Die in den Signalspeichern 8, 9 und 10 gespeicherten Signale werden in einer ersten Korrekturschaltung 12 mittels empirischer Parameter verarbeitet, so daß am Ausgang 14 der Korrekturschaltung 12 ein Signal auftritt, das im wesentlichen von Störungen des Strömungsprofils im Rohrstück 1, insbesondere von Abweichungen des Strömungsprofils von der Rotationssymmetrie, frei ist.

Unterhalb der Elektroden 3a, 3b sind zwei weitere von Ladungsverschiebungen in der Flüssigkeit beeinflußte Elektroden 3a′ und 3b′ angeordnet, deren mittlere Verbindungslinie X′ den Strom im wesentlichen quer zum Rohrstück 1 und im wesentlichen rechtwinklig zur mittleren Verbindungslinie Y zwischen den Magneten 2a, 2b durchsetzt. Der Taktgeber 11 schaltet überdies eine zweite Weiche 7′, die die von den zweiten Elektroden 3a′, 3b′ über einen Signalverstärker 6′ abgenommenen Meßspannungen in zweite Speicher 8′, 9′, 10′ leitet, die den Speichern 8, 9, 10 entsprechen, also unterschiedlichen Schaltzuständen des Elektromagneten 2b. Die Ausgänge auch der Speicher 8′, 9′, 10′ sind an die erste Korrekturschaltung 12 zur Erzeugung des Ausgangssignals am Ausgang 14 auch aus den in diesen Speichern 8′, 9′, 10′ gespeicherten Signalen mittels empirischer Parameter angeschlossen.

Bei einer Teilfüllung des Rohrstücks 1 gibt die erste Korrekturschaltung 12 auf den Ausgang 14 ein Signal, das der Teilfüllung entspricht.

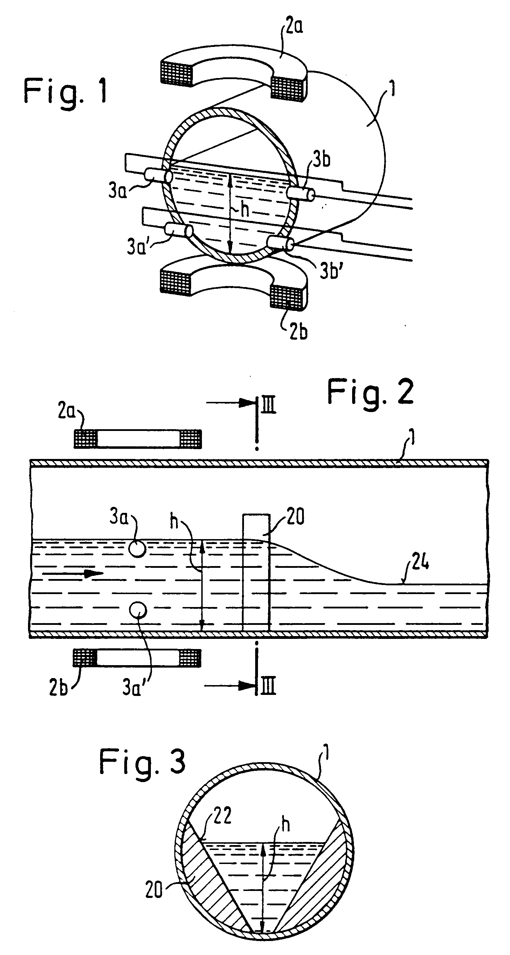

In den Fig. 1 bis 3 ist eine Teilfüllung durch einen Pegel h gekennzeichnet. Diese Teilfüllung herrscht vor einem Wehr 20, das einen sich nach unten verjüngenden Durchlaßquerschnitt 22 aufweist. Stromabwärts des Wehrs 20 fällt der Pegel h ab, wie durch den Pegelverlauf 24 angedeutet.

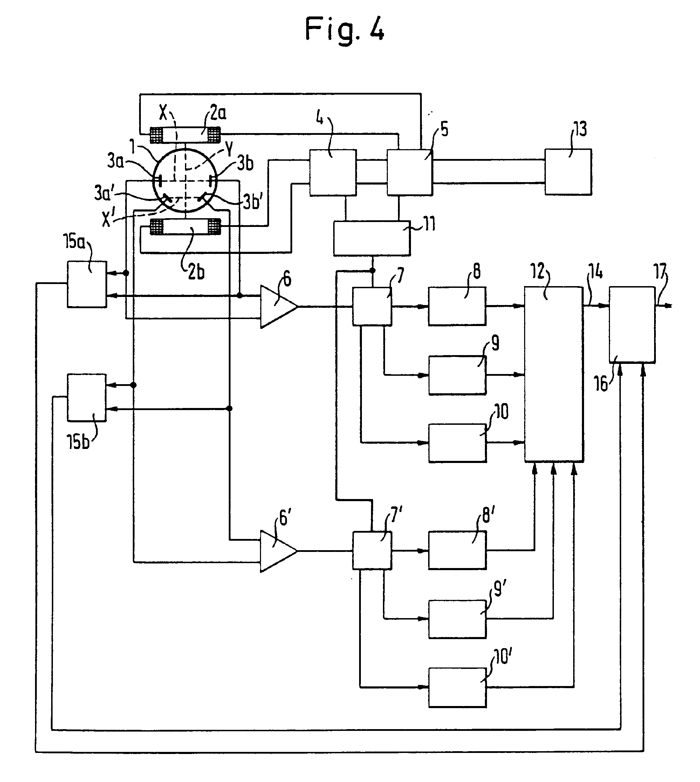

Die Pegelhöhe h vor dem Wehr 20 wird durch die Anordnung der Elektroden 3a, 3b, 3a′ und 3b′ erfaßt. An die Elektroden 3a und 3b ist, wie Fig. 4 zeigt, eine Detektorschaltung 15a angeschlossen und an die Elektroden 3a′ und 3b′ ist eine Detektorschaltung 15b angeschlossen. Diese Detektorschaltungen 15a und 15b erkennen eine auch schon teilweise Benutzung der Innenfläche des Rohrstücks 1 im Bereich der Elektroden 3a, 3b bzw. 3a′, 3b′ und liefern entsprechende Ausgangssignale an eine zweite Korrekturschaltung 16, die das Signal am Ausgang 14 zu einem Signal an ihrem Ausgang 17 korrigiert, das den Pegelstand vor dem Wehr 20 berücksichtigt und somit die Messung des Stroms der Flüssigkeit im Sinne einer Verbesserung korrigiert.

## Patentansprüche

1. Vorrichtung, die zur Messung des Stroms einer elektrische Ladungen enthaltenden Flüssigkeit geeignet ist, mit einem von der Flüssigkeit durchströmten, wenigstens innenseitig elektrisch isolierenden, im wesentlichen waagerecht verlaufenden Rohrstück (1) mit einer Magnetanordnung (2a, 2b), die ein das Rohrstück (1) wenigstens annähernd diametral durchsetzendes Magnetfeld erzeugt, mit einer Elektrodenanordnung (3a, 3b, 3a′, 3b′), die eine Verschiebung von Ladungen in der Flüssigkeit durch das Magnetfeld quer zur Richtung des Stroms der Flüssigkeit erfaßt, und mit einer von der Elektrodenanordnung (3a, 3b, 3a′, 3b′) gesteuerten Auswerteschaltung, die ein dem Strom der Flüssigkeit entsprechendes, auch den Pegel (h) der Flüssigkeit im Rohrstück (1) berücksichtigendes Ausgangssignal abgibt,
**dadurch gekennzeichnet,**
daß sich im Rohrstück (1) stromabwärts der Elektrodenanordnung (3a, 3b, 3a′, 3b′) ein den Strom der Flüssigkeit stauendes, von der Flüssigkeit zu durchfließendes Wehr (20) befindet und daß die Auswerteschaltung unter Einbeziehung der Abmessungen des Wehrs (20) geeicht ist.

2. Vorrichtung nach Anspruch 1, dadurch gekennzeichnet, daß das Wehr (22) einen sich nach unten verengenden Durchlaßquerschnitt (22) hat.

3. Vorrichtung nach Anspruch 1 oder 2, dadurch gekennzeichnet, daß die Elektrodenanordnung (3a, 3b, 3a′, 3b′) in unterschiedlichen Höhen angeordnete Elektroden (3a; 3b; 3a′; 3b′) aufweist, daß die Auswerteschaltung eine den Pegel (h) der Flüssigkeit im Rohrstück (1) relativ zu der Elektrodenanordnung (3a, 3b, 3a′, 3b′) wenigstens annähernd erfassende Detektorschaltung (15a, 15b) aufweist und daß die Detektorschaltung (15a, 15b) eine das Ausgangssignal korrigierende Korrekturschaltung (16) steuert.

## Claims

1. Apparatus which is suitable for measuring the current of a liquid containing electrical charges, having a substantially horizontally extending tube section (1) through which the liquid flows and which is electrically insulating at least on the inside, having a magnet arrangement (2a, 2b), which generates a magnetic field passing at least approximately diametrically through the tube section (1), with an electrode arrangement (3a, 3b, 3a′, 3b′) which detects any shift in the charges in the liquid through the magnetic field transversely to the direction of flow of the liquid, and with an evaluating circuit controlled by the electrode arrangement (3a, 3b, 3a′, 3b′), said evaluating circuit emitting an output signal corresponding to the current of the liquid and also taking into account the level (h) of liquid in the tube section (1), characterised in that in the tube section (1), downstream of the electrode arrangement (3a, 3b, 3a′, 3b′), there is a weir (20) through which the liquid has to flow and which dams the flow of liquid and in that the evaluating circuit is calibrated so as to take account of the dimensions of the weir (20).

2. Apparatus according to claim 1, characterised in that the weir (22) has a downwardly narrowing cross-section of flow (22).

3. Apparatus according to claim 1 or 2, characterised in that the electrode arrangement (3a, 3b, 3a′, 3b′) comprises electrodes (3a; 36; 3a′; 3b′) arranged at different heights, in that the evaluating circuit comprises a detector circuit (15a, 15b) which determines at least approximately the level (h) of liquid in the tube section (1) relative to the electrode arrangement (3a, 3b, 3a′, 3b′) and in that the detector circuit (15a, 15b) controls a corrector circuit (16) which corrects the output signal.

## Revendications

1. Dispositif apte à la mesure du débit d'un liquide contenant des charges électriques avec un élément tubulaire (1) s'étendant sensiblement horizontalement, traversé par le liquide et, au moins dans sa partie intérieure isolant électriquement, avec un système d'aimant 2a, 2b qui produit un champ magnétique traversant l'élément tubulaire (1) au moins de façon approximative diamétralement, avec un système d'électrodes (3a, 3b, 3a′, 3b′), qui détecte un décalage ou déplacement des charges dans le liquide à travers le champ magnétique transversalement à la direction du courant du liquide et avec un circuit d'évaluation commandé par le système d'électrodes (3a, 3b, 3a′, 3b′), qui émet un signal de sortie correspondant au débit de liquide et prenant également en considération le niveau H du liquide dans l'élément tubulaire (1),
caractérisé en ce qu'un système d'électrodes (3a, 3b, 3a′, 3b′), en aval de l'élément tubulaire (1) immobilise le débit de liquide devant traverser le déversoir (20) et en ce que le circuit d'évaluation est étalonné en prenant en considération les dimensions du déversoir (20).

2. Dispositif selon la revendication 1, caractérisé en ce que le déversoir (22) comporte une section transversale de passage allant en se rétrécissant vers le bas.

3. Dispositif selon la revendication 1 ou 2, caractérisé en ce que le système d'électrodes (3a, 3b, 3a′,3b′), comporte des électrodes (3a; 3b; 3a′; 3b′) disposées à différentes hauteurs, en ce que le circuit d'évaluation comporte un circuit de détecteur (15a, 15b) captant le niveau H du liquide dans l'élément tubulaire (1) par rapport au système d'électrodes (3a, 3b, 3a′, 3b′) au moins de façon approximative, et en ce que le circuit de détecteur (15a, 15b) commande un circuit de correction (16) corrigeant le signal de sortie.
